# EUROPEAN PATENT SPECIFICATION

(11) **EP 1 529 953 B1**
(45) Date of publication and mention of the grant of the patent: **29.09.2010**
(21) Application number: 04025857.6
(22) Date of filing: 30.10.2004
(51) Int. Cl.: F02M 37/00

(54) **Fuel supply arrangement for a vehicle**
Einrichtung zur Kraftstoffversorgung für ein Fahrzeug
Dispositif d'alimentation en carburant pour véhicule

(30) Priority: 05.11.2003 GB 0325909
(43) Date of publication of application: 11.05.2005
(73) Proprietor: Bombardier Transportation GmbH, 10785 Berlin (DE)
(72) Inventor: Körger, Harald, 16727 Schwante (DE)
(74) Representative: Cohausz & Florack

(56) References cited:
- WO-A-91/14091
- GB-A- 2 202 034
- US-A- 4 411 239
- US-A- 5 363 814
- PATENT ABSTRACTS OF JAPAN vol. 008, no. 140 (M-305), 29 June 1984 (1984-06-29) & JP 59 037258 A (HITACHI ZOSEN KK), 29 February 1984 (1984-02-29)
- PATENT ABSTRACTS OF JAPAN vol. 011, no. 238 (M-613), 5 August 1987 (1987-08-05) & JP 62 051750 A (MITSUBISHI HEAVY IND LTD), 6 March 1987 (1987-03-06)

## Description

The present invention relates to a fuel supply arrangement for a vehicle, in particular for a rail vehicle, comprising a main tank for receiving fuel to be supplied to an engine of said vehicle in a supply direction.

In modern low floor rail vehicles, the space available for functional components of the vehicle, such as fuel tanks etc., is very limited due to the continuous requirement to enhance both, transport capacity and passenger comfort. There is an ongoing need to provide as much space as possible for passenger compartments leading to less space available for such functional components.

Fuel tanks for low floor rail vehicles are commonly located in an underfloor section of the low floor section of the vehicle. In order to reduce their impact on the space available for the passenger compartment off the vehicle, those tanks usually have very long body of little height. Thus, depending on the degree of filling of the tank, the fuel forms a relatively thin layer within the tank. Nevertheless, due to their large dimensions in the horizontal plane, such tanks may take a sufficient amount of fuel.

Such tanks suffer from several disadvantages. One of those disadvantages is caused by the movement of the vehicle. Due to this movement the fuel surface within the tank is subjected to movements as well. As soon as the degree of filling of the tank has fallen below a certain level, this movement of the fuel surface may cause that certain sections of the tank are temporarily not covered with fuel anymore. In the event that this phenomenon occurs in a section where the fuel outlet of the tank towards the engine is located, air is sucked into the fuel lines and the fuel supply towards the engine is at least temporarily interrupted. Depending on the amount of time this situation prevails this may even lead to a stop of the engine despite the fact that there is still a considerable amount of fuel present within the tank. Furthermore, in particular in case of so-called common rail engines, excessive intake of air into the fuel injection system may even cause damage of the injection system, in particular of the injection pump.

To overcome this problem it has been proposed to install fuel stabilizers within the tank in order to reduce such fuel movement. As an example, it has been suggested to install perforated metal sheets within the tank to reduce fuel movement. Although this may help to some extent to prevent or damp high frequency movements of the fuel, the above problem is not eliminated for low frequency movements of the fuel. Such low frequency movements of the fuel may be generated when the vehicle is traveling through long curves, long ascents, long descents or the like.

As another approach to solve the above problem, it has been proposed to provide a plurality of fuel outlets in order to suck fuel from the tank at different locations. In order to avoid excessive intake of air into the fuel lines valves were provided to close the respective fuel outlet in case any intake of air is detected by a corresponding sensor associated to the respective outlet. Obviously, such a solution leads to considerable additional costs.

It is thus an object of the present invention to provide a fuel supply arrangement and a vehicle that, at least to some extent, overcomes the above disadvantages. It is a further object of the present invention to provide a fuel supply arrangement and a vehicle that ensure in a cost-efficient manner continued fuel supply to the engine even at low degrees of filling of the main tank.

The above objects are achieved starting from the fuel supply arrangement according to the preamble of claim 1 by the features of the characterizing part of claim 1. They also achieved by a vehicle according to claim 15.

The present invention is based on the technical teaching that continued fuel supply to the engine even at low degrees of filling of the main tank may be ensured in a cost-efficient manner when, in a generic fuel supply arrangement, a buffer tank is provided, said buffer tank being located after the main tank with respect to supply direction and adapted to receive fuel from said main tank and to supply fuel to said engine.

Fuel supply arrangements for a vehicle with main and buffer tanks are known from US 5 363 814 A and WO 91/14091 A.

Such a buffer tank may be easily configured in such a manner that the fuel contained therein is less affected by movements of the vehicle. For example, such a buffer tank may easily be designed to maintain, even at low degrees of filling, a sufficient distance between the moving fuel surface and the fuel outlet leading to the engine. This may be achieved by keeping the buffer tank's dimensions in the horizontal directions small with respect to its dimension in the vertical direction. Thus, even if the vehicle movement induces considerable movements within the fuel located within the buffer tank, it may be effectively avoided that this leads to a contact between the fuel outlet and air contained within the buffer tank. In other words, intake of air into the fuel supply system may be effectively avoided. Furthermore, such a buffer tank may be of very simple design leading to low production and implementation costs of the solution according to the present invention.

A further advantage of the fuel supply arrangement according to the present invention lies in the fact that, thanks to the compensation for fuel supply interruption from the main tank, the main tank may be operated up to lower degrees of filling of the main tank than in previously known systems. Thus, for certain given amount of fuel to be available for supplying the engine, a main tank of smaller dimensions than in the previously known systems may be used. This leads to a gain in space available for the passenger compartment and, thus, an increase in transport capacity and/or passenger comfort.

The buffer tank may be of any suitable size. Preferably, the buffer tank has a considerably smaller usable volume than said main tank. It is only recommended to provide the buffer tank with a usable volume that ensures uninterrupted fuel supply for a certain amount of time during which the fuel supply from the main tank to the buffer tank is interrupted due to the phenomenon initially described. To achieve this, preferred embodiments of the present invention provide for a usable volume of said buffer tank that corresponds to a volume of fuel sufficient to supply the engine for a predetermined first amount of time during normal operation of the engine.

Said first amount of time is determined as a function of a second amount of time. This second amount of time is representative of the maximum amount of time with continuously missing fuel supply to said buffer tank which is to be expected or admissible during normal operation of said vehicle. It will be appreciated, that such a second amount of time may be easily calculated based on theoretical values or assumptions. Furthermore or in addition thereto, it may be calculated from experience values gathered during operation of such vehicles.

In the context of rail vehicles, this second amount of time, for example, may be a maximum value depending on the maximum amount of time necessary at a certain operating condition of the engine (e.g. at full load operation or at operation with maximum fuel consumption) to travel through any curve on a given railway network the rail vehicle is dedicated to operate on, and on the fuel consumption associated to said operating condition.

It will be appreciated that said second amount of time may also be calculated based on other parameters, such as machine parameters. For example, it may be calculated from the maximum time a fuel pump between the main tank at the buffer tank may run dry, i.e. substantially without supplying fuel. Once this maximum value has been reached other measures will have to be taken to prevent damage to fuel pump which are not an object of the present invention.

Said first amount of time may be equal to said second amount of time. In other cases it may be calculated from said second amount of time by multiplying said second amount of time by an appropriate security factor. Such a security factor typically ranges from 1 to 2. Preferably, said security factor ranges from 1 to 1.5. Anyway, even higher security factors may be chosen depending on the importance of uninterrupted fuel supply during operation of the engine.

With preferred embodiments of the fuel supply arrangement according to the present invention said first amount of time ranges between 0.5 and 3 minutes at full load operation of the engine. Preferably, said first amount of time ranges between 1 and 2 minutes. Thus, it is to be expected that, under normal operating conditions at full load operation, any curve on a conventional railway network will have been traveled through.

The fuel may be supplied from the main tank to the buffer tank in any suitable manner. For example, in cases where the fuel outlet of the main tank is located at a higher level above ground than the maximum fuel level within the buffer tank: fuel supply may be provided by gravity. Preferably, at least one fuel pump is located between the main tank and the buffer tank for supplying fuel from the main tank to the buffer tank in the supply direction. Said fuel pump may be of any suitable design to supply fuel to the buffer tank.

With preferred embodiments of the present invention said fuel pump is adapted to supply fuel to said buffer tank at a first volumetric flow rate, said first volumetric flow rate being at least equal to a second volumetric flow rate to be supplied to said engine. Said second volumetric flow rate may be a given constant flow rate, e.g. the maximum volumetric flow rate to be supplied to said engine during normal operation. Thus, during normal operation of the engine, there is at least as much fuel supplied to the buffer tank as is drawn from the buffer tank to the engine. As a consequence, with uninterrupted fuel supply from the main tank to the buffer tank, the degree of filling of the buffer tank does not decrease. Thus, there is enough fuel in the buffer tank to compensate for events where this fuel supply to the buffer tank is interrupted. After such an event with interrupted fuel supply to the buffer tank the degree of filling of the buffer tank has fallen to certain level. Since the engine is usually not operated at its maximum fuel intake, fuel supply to the buffer tank at said first volumetric flow being equal to the maximum engine intake volumetric flow will lead to a recovery of the degree of filling of the buffer tank to its desired value for compensating for events with interrupted fuel supply from the main tank.

Depending on the actual fuel intake of the engine, this recovery may take a certain time. In order to provide rapid recovery to a desired degree of filling of the buffer tank after such interrupted fuel supply from the main tank preferred embodiments of the present invention provide for a first volumetric flow rate that is greater than said second volumetric flow rate.

According to further embodiments of the present invention the volumetric flow rate of the fuel supply to the buffer tank may not be constant but may be controlled depending on certain appropriate parameters. For example, such parameters may be the fuel level within the buffer tank, the actual fuel intake of the engine of or any other suitable parameter permitting to draw conclusions with respect to the actions to be taken to ensure proper fuel supply interrupt compensation.

Thus, with certain embodiments of the present invention, there is provided a pump control unit connected to said fuel pump for controlling the volumetric flow rate of the fuel supplied to the buffer tank by the fuel pump. Said pump control unit is adapted to receive a first signal. Furthermore, said pump control unit is adapted to control the volumetric flow rate supplied by said fuel pump as a function of said first signal. Said first signal may be representative of any of the parameters mentioned above for controlling the volumetric flow rate supplied by the fuel pump. It may also be representative of any suitable combination of such parameters. With certain embodiments of the present invention is provided that said first signal is representative of a variable second volumetric flow rate. Preferably, said second volumetric flow rate is an actual volumetric flow rate of the fuel to be supplied to said engine.

To ensure the maximum degree of filling of the buffer tank it is preferably provided that said buffer tank comprises an overflow device for removing excess fuel from said buffer tank. Thus, even when the amount of fuel supplied to the buffer thinking surpasses the amount of fuel drawn from the buffer tank by the engine, it is ensured that the fuel level within the buffer tank does not rise above a certain level defined by said overflow device. This overflow device is preferably connected to the main tank via a first fuel return line for returning the excess fuel to the main tank against said supply direction.

Further preferred embodiments of the present invention provide for a configuration wherein said buffer tank comprises a fuel inlet for receiving excess fuel from the engine via a second fuel return line. This leads to a reduction of the first volumetric flow rate to be provided to the buffer tank and, thus, allows for the use of smaller and lighter components for the fuel supply system from the main tank to the buffer tank.

In order to keep the temperature requirements within the fuel supply system corresponding heating and/or cooling devices may be provided at appropriate locations. In particular, a second fuel return line may be connected to said fuel inlet, said second fuel return line comprising a fuel cooling device for cooling the fuel supplied to said buffer tank via said second fuel return line.

Preferably, a fuel pre-filter is provided between the main tank and the buffer tank. Thus, due to the lower instantaneous flow rates at this location compared to the instantaneous flow rates in the fuel injection system of the engine, smaller and lighter filters may be used.

The fuel supply arrangement according to present invention may be used at any location within a vehicle. Preferably, it is used for a so-called underfloor arrangement. Thus, preferably, at least the main tank is adapted to be arranged in an underfloor section of said vehicle. Furthermore, the fuel supply arrangement according to present invention may be used with any kind of vehicle design. In particular in combination with so-called low floor vehicles the advantages of the present invention come to their full effect. Thus, preferably, at least the main tank is adapted to be arranged in an underfloor section of a low floor section of such a low floor vehicle.

The present invention further relates to a vehicle, in particular a rail vehicle, comprising an engine and a fuel supply arrangement according to the present invention as previously described. Said fuel supply arrangement is connected to said engine for supplying fuel to said engine. With such a vehicle the above objects and advantages may be achieved in the same manner as previously described with reference to the fuel supply arrangement according to the present invention. Thus, for a detailed description of the features and advantages of such a vehicle it is here referred to the above description.

The buffer tank may be located at any suitable position within the vehicle. Preferably, the buffer tank is located adjacent to the engine. With such an arrangement it is possible to keep the fuel lines between the buffer tank and the engine very short. Such short fuel lines provide for a small and defined flow resistance and, thus, for a small and defined pressure drop between their respective ends. This helps to keep the strict fuel pressure requirements at the fuel inlet and return line of the injection pump of the engine without extensive constructional effort. Preferably, said buffer tank is located within an engine compartment of the vehicle, said engine compartment receiving the engine.

As already mentioned above, the present invention performs particularly well in combination with so-called low floor vehicles. Thus, preferably, said vehicle is a rail vehicle having a low floor section, said main tank being located in an underfloor section of said low floor section.

The present invention provides a high degree of freedom with respect to placement of the components of the vehicle. In particular, the main tank and the engine are not subject to any restrictions with respect to their spatial relationship. Thus, for example, the engine may be situated in any location deemed to be convenient. The engine may, for example, be located in a conventional engine compartment located between a passenger compartment and a driver cabin. The engine may also be located in a roof compartment of the vehicle. With preferred embodiments of the vehicle according to the present invention the engine is located in an underfloor section of said vehicle. Such a configuration allows for further enhancement of passenger comfort and transport capacity.

Further embodiments of the present invention will become apparent from the dependence claims and the following description of preferred embodiments which refers to the appended figures. It is shown in:
- Figure 1: a schematic representation of a preferred embodiment of a vehicle according to the present invention comprising a preferred embodiment of the fuel supply arrangement according to the present invention;
- Figure 2: a schematic representation of a further preferred embodiment of a vehicle according to the present invention comprising a preferred embodiment of the fuel supply arrangement according to the present invention.

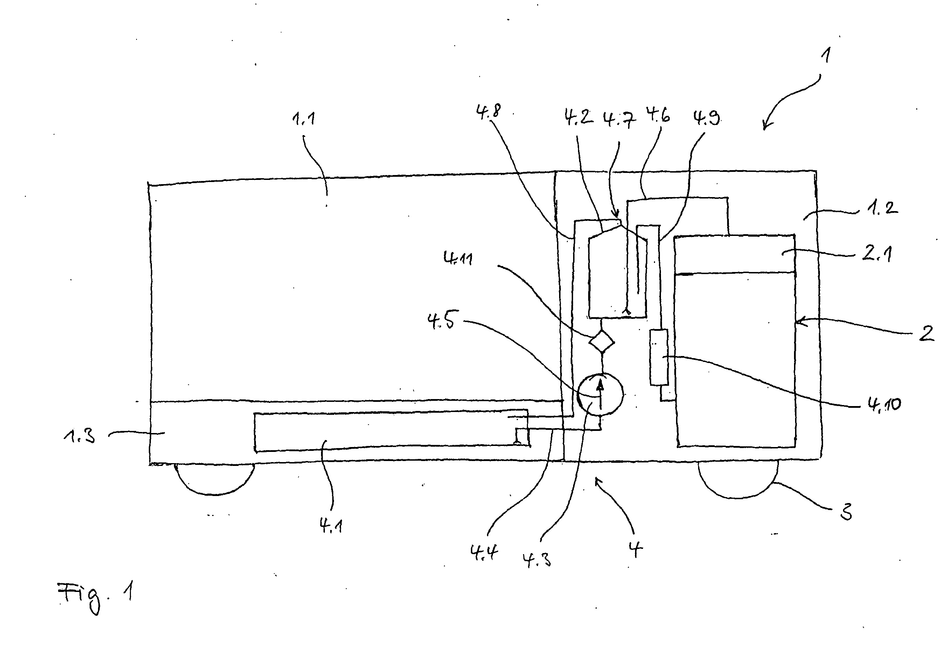

Figure 1 shows a schematic representation of a low floor rail vehicle 1 according to the present invention having a passenger compartment 1.1, an engine compartment 1.2 and a low floor section 1.3 below the passenger compartment 1.1. A common rail diesel engine 2 is located within the engine compartment 1.2. The engine 2 serves to provide the power necessary to drive the wheels 3 of the rail vehicle 1 as well as to provide the power necessary for auxiliary units of the rail vehicle 1, such as illumination units, air-conditioning units etc. Anyway, it will be appreciated that, with other embodiments of the present invention, such an engine may be, apart from a common rail diesel engine, any other suitable engine to be provided with fuel. Furthermore, the engine may, of course, also be dedicated to provide the power for a drive unit or an auxiliary unit exclusively.

The fuel necessary for driving the engine 1 is provided by a fuel supply arrangement generally denoted by reference numeral 4. This fuel supply arrangement 4 comprises a main tank 4.1, a buffer tank 4.2 and a fuel pump 4.3. Via a first fuel line 4.4, the fuel pump 4.3 sucks fuel from the main tank 4.1 and supplies it in a fuel supply direction 4.5 to the buffer tank 4.2. Via a second fuel line 4.6, a common rail fuel injection device 2.1 of the engine 2 sucks fuel from the buffer tank 4.2 and supplies it to the engine 2.

While the main tank is located in the underfloor section 1.3 of the rail vehicle 1, the buffer tank is located close to the engine 2 within the engine compartment 1.2. This leads to a very short second fuel line 4.6 helping to maintain the strict pressure requirements at the fuel inlet to the injection device 2.1.

The fuel supply arrangement 4 is designed in such a manner that the fuel supply to the engine is less sensitive to vehicle movement induced movement of the fuel. On the one hand, this is achieved by the buffer tank 4.2 itself. Contrary to the design of the main tank 4.1, the vertical dimensions of the buffer tank 4.2 are not small in relation to its horizontal dimensions. Thus, even at low degrees of filling of the buffer tank 4.2, a sufficient distance between the moving fuel surface and the fuel outlet leading to the second fuel line 4.6 and to the engine 2 is maintained. To increase this effect, the buffer tank's dimensions in the horizontal directions are preferably kept small with respect to its dimension in the vertical direction. Thus, even if the vehicle movement induces considerable movements within the fuel located within the buffer tank 4.2, it may be effectively avoided that this leads to a contact between the fuel outlet towards the second fuel line 4.6 and air contained within the buffer tank 4.2. Thus, up to very low degrees of filling of the buffer tank 4.2, vehicle movement induced movement of the fuel within the buffer tank 4.2 does not cause intake of air into the second fuel line 4.6.

The buffer tank 4.2 has a considerably smaller usable volume than the main tank 4.1. Anyway, in the present embodiment the buffer tank 4.2 has a usable volume that ensures, when completely filled with fuel, uninterrupted fuel supply to the engine 2 for a certain first amount of time during which the fuel supply from the main tank 4.1 to the buffer tank 4.2 is interrupted. As initially described, such a fuel supply interruption may be the case when the fuel pump 4.3 sucks air from the main tank 4.1 due to vehicle movement induced movements of the fuel within the main tank 4.1.

The first amount of time is determined as a function of a second amount of time. This second amount of time is representative of the maximum amount of time with continuously missing fuel supply to said buffer tank which is to be expected during normal operation of vehicle 1. This second amount of time may be easily calculated based on theoretical values, assumptions and experience values gathered during operation of comparable vehicles. For example, the second amount of time may be calculated using statistical information on the curvature, length etc. of the curves to be traveled by the vehicle as well as on the traveling speeds within such curves.

In the present embodiment the first amount of time is calculated from the second amount of time by multiplying said second amount of time by a first security factor of 1.5. Anyway, higher or lower security factors may be chosen depending on the importance of uninterrupted fuel supply during operation of the engine 2.

In the present embodiment the usable volume of the buffer tank is 5 liters. With a specific fuel consumption of about 214 g/kWh, a fuel density of about 0.83 kg/m³ and an engine power of 662 kW under maximum load conditions, this usable volume is sufficient to supply the engine 2 with fuel for a first amount of time of about 1.8 minutes. With a conventional railway network, any curve will have been traveled through at these operating conditions. Usually, at these operating conditions, any curve will have been traveled through within a second amount of time of about 1.5 minutes. Thus, a security factor of 1.2 has been used.

It will be appreciated that, with other embodiments of the present invention, the usable volume may also be calculated based on the maximum amount of time the fuel pump 4.3 may run dry, i.e. substantially without supplying fuel. For example, this maximum amount of time may be about 15 minutes. Furthermore, the usable volume may be calculated based on the specific consumption of the engine and the power provided by the engine under coasting conditions, i.e. with power being supplied only to auxiliary units. This is due to the fact that such a long interruption of fuel supply from the main tank is only to be expected during such conditions. With a specific fuel consumption of about 228 g/kWh, a fuel density of about 0.83 kg/m³ and an engine power of 73 kW under coasting conditions, the above usable volume of 5 liters with also be sufficient to supply the engine with fuel for 15 minutes.

To maintain the ability of uninterrupted fuel supply to the engine 2, the fuel pump 4.3 is adapted to supply fuel to the buffer tank 4.2 at a first volumetric flow rate which is greater than a second volumetric flow rate to be supplied to the engine 2. In the embodiment shown, the second volumetric flow rate is a given constant flow rate, namely the maximum volumetric flow rate to be supplied to the engine 2 during normal operation. Thus, during normal operation of the engine, there is more fuel supplied to the buffer tank 4.2 than is drawn from the buffer tank 4.2 to the engine 2 by the fuel injection device 2.1.

To avoid the build up of excessive pressure within the buffer tank 4.2, the buffer tank 4.2 is provided with an overflow device 4.7.. This overflow device 4.7 comprises a simple fuel outlet of the buffer tank 4.2 connected to a first fuel return line 4.8 leading from the buffer tank 4.2 back to the main tank 4.1. Thus, if the entire usable volume of the buffer tank 4.2 is filled with fuel, additional fuel supply to the buffer tank leads to a fuel return to the main tank 4.1 via the first fuel return line 4.8 of the overflow device 4.7.

Thus, during normal operation of the engine 2 and with uninterrupted fuel supply from the main tank 4.1 to the buffer tank 4.2, there is more fuel supplied to the buffer tank 4.2 than is drawn from the buffer tank 4.2. This leads to an increasing degree of filling of the buffer tank 4.2 until its maximum degree of filling is reached, i.e. its entire usable volume is filled with fuel. Once this state has been reached, additional fuel supply to the buffer tank 4.2 leads to a fuel return flow to the main tank 4.1 via the first fuel return line 4.8 as described above.

Thus, there is enough fuel in the buffer tank 4.2 to compensate for events where the fuel supply to the buffer tank 4.2 is interrupted. In such an event with interrupted fuel supply to the buffer tank 4.2 the degree of filling of the buffer tank 4.2 falls due to the continued fuel supply from the buffer tank 4.2 to the engine 2. After such an event with interrupted fuel supply to the buffer tank 4.2 the degree of filling of the buffer tank 4.2 has fallen to certain level depending on the amount of time of interrupted fuel supply to the buffer tank and the amount of fuel supplied from the buffer tank 4.2 to the engine 2 during this period. As mentioned above, upon resumption of the fuel supply to the buffer tank 4.2, there is more fuel supplied to the buffer tank 4.2 than is drawn from the buffer tank 4.2 leading to a re-increasing degree of filling of the buffer tank 4.2 until the maximum degree of filling is reached or a new event of interrupted fuel supply to the buffer tank 4.2 occurs.

Depending on the actual fuel intake of the engine 2 and the delays between subsequent events of interrupted fuel supply to the buffer tank 4.2, this recovery may take a certain time. In the present embodiment the first volumetric flow rate determined by determined by multiplying the second volumetric flow rate by a second security factor of 1.2 to ensure sufficiently rapid recovery. Anyway, it will be appreciated that, with other embodiments of the present invention, other second security factors may be chosen that may be higher or lower mainly depending on the expected delays between subsequent events of interrupted fuel supply to the buffer tank 4.2.

To keep the fuel pump 4.3 as small and light as possible a second fuel return line 4.9 is connected to a fuel inlet of the buffer tank 4.2. This second fuel return line 4.9 returns excess fuel not consumed by the engine 2 back to the buffer tank 4.2. To keep the fuel temperature within the buffer tank 4.2 within predetermined limits, the second fuel return line 4.9 is provided with a fuel cooling device 4.10 cooling down the fuel returned from the engine 2 to the buffer tank 4.2 by a desired amount.

In the present embodiment a fuel pre-filter 4.11 is provided between the main tank 4.1 and the buffer tank 4.2, in particular between the fuel pump 4.3 and the buffer tank 4.2. Due to the lower instantaneous flow rates at this location compared to the instantaneous flow rates in the fuel injection device 2.1 of the engine 2, smaller and lighter filters may be used.

As will be apparent from the above, an advantage of the fuel supply arrangement according to the present invention lies in the fact that, thanks to the compensation for fuel supply interruption from the main tank 4.1, the main tank 4.1 may be operated up to lower degrees of filling than in previously known systems. Thus, for certain given amount of fuel to be available for supplying the engine 2, the main tank 4.1 may have smaller dimensions than in the previously known systems. In particular, its vertical dimension may be reduced leading to a gain in space available for the passenger compartment 1.1 and, thus; an increase in transport capacity as well as passenger comfort of the vehicle 1.

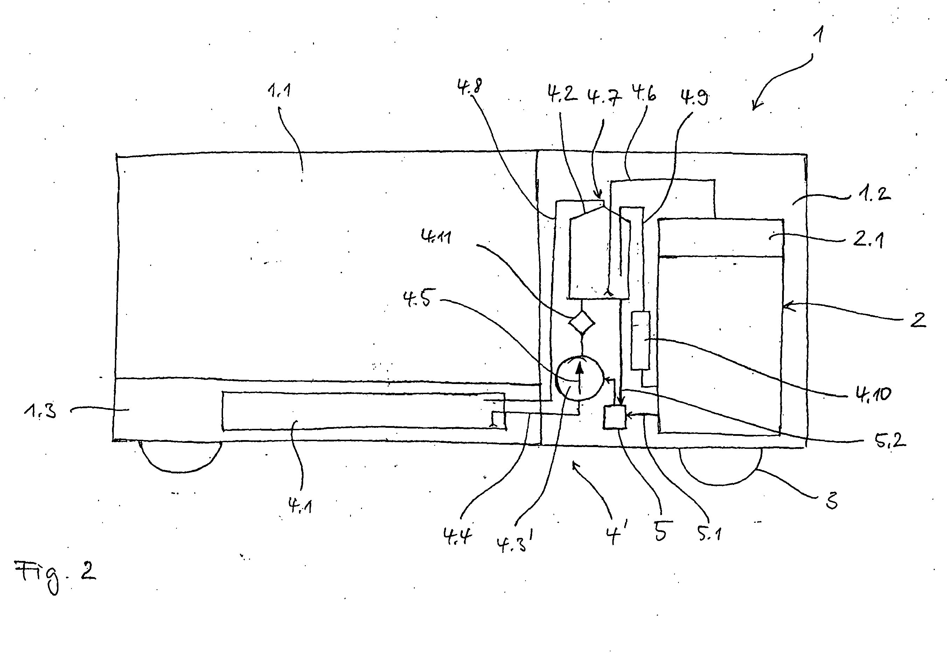

In the foregoing, the present invention has been described in the context of an embodiment with a fuel pump providing a constant first volumetric flow rate. Anyway, it will be appreciated that, according to further embodiments of the present invention, the volumetric flow rate of the fuel supply to the buffer tank may not be constant but may be controlled depending on certain appropriate parameters. One such embodiment is shown in Figure 2. This embodiment corresponds in its basic design to the one of Figure 1. Thus, identical parts have been denoted by the same reference numerals. With respect to the description of those parts it is here referred to the preceding description with reference to Figure 1. Only the differences in relation to the embodiment of Figure 1 will be described in the following.

One of the differences is that fuel pump 4.3' is adapted to provide a variable volumetric flow rate. As may be seen from Figure 2, there is provided a pump control unit 5 connected to the fuel pump 4.3' for controlling the volumetric flow rate of the fuel supplied to the buffer tank 4.2 by the fuel pump 4.3'. This pump control unit 5 is adapted to receive a first signal and to control the volumetric flow rate supplied by said fuel pump as a function of said first signal. Said first signal may be representative of any of the parameters mentioned above for controlling the volumetric flow rate supplied by the fuel pump 4.3'. It may also be representative of any suitable combination of such parameters.

With the embodiment of Figure 2 said first signal is representative of a variable second volumetric flow rate, said second volumetric flow rate being a mean value of the actual volumetric flow rate of fuel to be supplied to the engine 2. This first signal is received by the pump control unit 5 via a first signal line 5.1 from an engine control unit (not shown) of the engine 2. Thus, upon normal operation without interrupted fuel supply to the buffer tank 4.2 the minimum necessary volumetric flow rate to be supplied to the buffer tank 4.2 for maintaining its degree of filling may be selected leading to a minimized energy consumption of the system.

The pump control unit 5 is further adapted to receive a third signal and to control the volumetric flow rate supplied by the fuel pump 4.3' as a function of said third signal. This third signal is representative of the fuel level within the buffer tank 4.2. The third signal is provided to the pump control unit 5 via a second signal line 5.2 from a fuel level detector of the buffer tank 4.2 (not shown). This consideration of the fuel level within the buffer tank 4.2 allows to appropriately react on situations where, due to several and/or long events with interrupted fuel supply to the buffer tank, the degree of filling of the buffer tank 4.2 reaches a critical level where compensation for such events is not available anymore for a sufficient amount of time. In such a situation the pump control unit 5 may temporarily increase the volumetric flow rate supplied by the fuel pump 4.3' in dependence on the information on the fuel level within the buffer tank 4.2 provided via said third signal.

## Claims

1. Fuel supply arrangement for a vehicle, in particular a rail vehicle, comprising a main tank (4.1) for receiving fuel to be supplied to an engine (2) of said vehicle in a supply direction (4.5) and a buffer tank (4.2), said buffer tank (4.2) being located after said main tank (4.1) with respect to said supply direction and adapted to receive fuel from said main tank (4.1) and to supply fuel to said engine (2), the usable volume of said buffer tank (4.2) corresponding to a volume of fuel sufficient to supply said engine (2) for a predetermined first amount of time during normal operation of said engine (2),
**characterized in that**
said first amount of time is determined as a function of a second amount of time, said second amount of time being representative of the maximum amount of time with continuously missing fuel supply to said buffer tank (4.2) to be expected or admissible during normal operation of said vehicle.

2. Fuel supply arrangement according to claim 1, **characterized in that** said buffer tank (4.2) has a considerably smaller usable volume than said main tank (4.1).

3. Fuel supply arrangement according to claim 1 or 2, **characterized in that** said first amount of time is determined by multiplying said second amount of time by a security factor, said security factor ranging from 1 to 1.5.

4. Fuel supply arrangement according to any one of the preceding claims, **characterized in that** said first amount of time ranges between 0.5 and 3 minutes, in particular between 1 and 2 minutes, at full load operation of said engine (2).

5. Fuel supply arrangement according to any one of the preceding claims, **characterized by** at least one fuel pump (4.3; 4.3') located between said main tank (4.1) and said buffer tank (4.2) for supplying fuel from said main tank (4.1) to said buffer tank (4.2) in said supply direction (4.5).

6. Fuel supply arrangement according to claim 5, **characterized in that** said fuel pump (4.3; 4.3') is arranged to supply fuel to said buffer tank (4.2) at a first volumetric flow rate, said first volumetric flow rate being at least equal to, preferably larger than, a second volumetric flow rate to be supplied to said engine (2).

7. Fuel supply arrangement according to claim 6, **characterized in that** said second volumetric flow rate is the maximum volumetric flow rate to be supplied to said engine (2) during normal operation of said engine.

8. Fuel supply arrangement according to claim 6, **characterized in that** there is provided a pump control unit (5) connected to said fuel pump (4.3') for controlling the volumetric flow rate of the fuel supplied to said buffer tank (4.2) by said fuel pump (4.3'), said pump control unit (5) being adapted to receive a first signal and to control the volumetric flow rate supplied by said fuel pump (4.3') as a function of said first signal, said first signal being representative of said second volumetric flow rate.

9. Fuel supply arrangement according to claim 8, **characterized in that** said second volumetric flow rate is an actual volumetric flow rate of the fuel to be supplied to said engine (2).

10. Fuel supply arrangement according to any one of the preceding claims, **characterized in that** said buffer tank (4.2) comprises an overflow device (4.7) for removing excess fuel from said buffer tank (4.2), said overflow device (4.7) preferably being connected to said main tank (4.1) via a first fuel return line (4.8) for returning said excess fuel to said main tank (4.1) against said supply direction (4.5).

11. Fuel supply arrangement according to any one of the preceding claims, **characterized in that** said buffer tank (4.2) comprises a fuel inlet for receiving excess fuel from said engine via a second fuel return line (4.9).

12. Fuel supply arrangement according to claim 11, **characterized by** a second fuel return line (4.9) connected to said fuel inlet, said second fuel return line (4.9) comprising a fuel cooling device (4.10) for cooling the fuel supplied to said buffer tank (4.2) via said second fuel return line (4.9).

13. Fuel supply arrangement according to any one of the preceding claims, **characterized in that** a fuel prefilter (4.11) is provided between said main tank (4.1) and said buffer tank (4.2).

14. Fuel supply arrangement according to any one of the preceding claims, **characterized in that** the main tank (4.1) is adapted to be arranged in an underfloor section (1.3) of said vehicle, in particular in an underfloor section of a low floor section of said vehicle.

15. Vehicle, in particular rail vehicle, comprising an engine (2) and a fuel supply arrangement (4; 4') according to any one of the preceding claims connected to said engine (2) for supplying fuel to said engine (2).

16. Vehicle according to claim 15, **characterized in that** said bluffer tank (4.2) is located adjacent to said engine (2), in particular within an engine compartment (1.2) of said vehicle receiving said engine (2).

17. Vehicle according to claim 15 or 16, **characterized in that** it is a rail vehicle having a low floor section, said main tank being located in an underfloor section (1.3) of said low floor section.

18. Vehicle according to any one of claims 15 to 17, **characterized in that** said engine (2) is located in an underfloor section of said vehicle.

## Patentansprüche

1. Brennstoffzufuhranordnung für ein Fahrzeug, insbesondere ein Schienenfahrzeug, das einen Haupttank (4.1) zur Aufnahme von Brennstoff, der einem Motor (2) des Fahrzeugs in einer Zufuhrrichtung (4.5) zugeführt wird, und einen Puffertank (4.2) umfasst, wobei der Puffertank (4.2) bezüglich der Zufuhrrichtung nach dem Haupttank (4.1) angeordnet ist und dafür ausgelegt ist Brennstoff vom Haupttank (4.1) zu erhalten und dem Motor (2) Brennstoff zuzuführen, wobei das verwendbare Volumen des Puffertanks (4.2) einem Brennstoffvolumen entspricht, das ausreicht, um den Motor (2) für eine vorbestimmte erste Zeitdauer bei normalem Betrieb des Motors (2) zu versorgen,
**dadurch gekennzeichnet, dass**
eine erste Zeitdauer als eine Funktion einer zweiten Zeitdauer festgelegt wird, wobei die zweite Zeitdauer repräsentativ ist für die maximale Zeitdauer mit kontinuierlich fehlender Brennstoffzufuhr zum Puffertank (4.2), die bei normalem Betrieb des Fahrzeugs erwartet wird oder zulässig ist.

2. Brennstoffzufuhranordnung nach Anspruch 1, **dadurch gekennzeichnet, dass** der Puffertank (4.2) ein beträchtlich kleineres verwendbares Volumen aufweist als der Haupttank (4.1).

3. Brennstoffzufuhranordnung nach Anspruch 1 oder 2, **dadurch gekennzeichnet, dass** die erste Zeitdauer durch Multiplizieren der zweiten Zeitdauer mit einem Sicherheitsfaktor festgelegt wird, wobei der Sicherheitsfaktor in einem Bereich von 1 bis 1,5 liegt.

4. Brennstoffzufuhranordnung nach einem der vorhergehenden Ansprüche,
**dadurch gekennzeichnet, dass** die erste Zeitdauer bei Volllastbetrieb des Motors (2) in einem Bereich zwischen 0,5 und 3 Minuten, insbesondere zwischen 1 und 2 Minuten, liegt.

5. Brennstoffzufuhranordnung nach einem der vorhergehenden Ansprüche,
**gekennzeichnet durch** mindestens eine Brennstoffpumpe (4.3; 4.3'), die zwischen dem Haupttank (4.1) und dem Puffertank (4.2) zur Brennstoffzufuhr vom Haupttank (4.1) zum Puffertank (4.2) in der Zufuhrrichtung (4.5) angeordnet ist.

6. Brennstoffzufuhranordnung nach Anspruch 5, **dadurch gekennzeichnet, dass** die Brennstoffpumpe (4.3; 4.3') dafür ausgelegt ist, dem Puffertank (4.2) Brennstoff mit einem ersten Volumenstrom zuzuführen, wobei der erste Volumenstrom mindestens gleich wie, bevorzugt größer als, ein zweiter dem Motor (2) zuzuführender Volumenstrom ist.

7. Brennstoffzufuhranordnung nach Anspruch 6, **dadurch gekennzeichnet, dass** der zweite Volumenstrom der maximale Volumenstrom ist, der dem Motor (2) bei normalem Betrieb des Motors zuzuführen ist.

8. Brennstoffzufuhranordnung nach Anspruch 6, **dadurch gekennzeichnet, dass** eine mit der Brennstoffpumpe (4.3') verbundene Pumpenkontrolleinheit (5) vorgesehen ist, zur Kontrolle des Volumenstroms des dem Puffertank (4.2) von der Brennstoffpumpe (4.3') zugeführten Brennstoffs, wobei die Pumpenkontroileinheit (5) dafür ausgelegt ist ein erstes Signal zu erhalten und den von der Brennstoffpumpe (4.3') zugeführten Volumenstrom als eine Funktion des ersten Signals zu kontrollieren, wobei das erste Signal repräsentativ für den zweiten Volumenstrom ist.

9. Brennstoffzufuhranordnung nach Anspruch 8, **dadurch gekennzeichnet, dass** der zweite Volumenstrom ein tatsächlicher Volumenstrom des dem Motor (2) zuzuführenden Brennstoffs ist.

10. Brennstoffzufuhranordnung nach einem der vorhergehenden Ansprüche,
**dadurch gekennzeichnet, dass** der Puffertank (4.2) eine Überlaufvorrichtung (4.7) zum Entfernen von überschüssigem Brennstoff aus dem Puffertank (4.2) aufweist, wobei die Überlaufvorrichtung (4.7) vorzugsweise mit dem Haupttank (4.1) über eine erste Brennstoffrücklaufleitung (4.8) zur Rückführung von überschüssigem Brennstoff zum Haupttank (4.1) entgegen der Zufuhrrichtung (4.5) verbunden ist.

11. Brennstoffzufuhranordnung nach einem der vorhergehenden Ansprüche,
**dadurch gekennzeichnet, dass** der Puffertank (4.2) einen Brennstoffeinlass zum Empfangen von überschüssigem Brennstoff vom Motor über eine zweite Brennstoffrücklaufleitung (4.9) aufweist.

12. Brennstoffzufuhranordnung nach Anspruch 11, **gekennzeichnet durch** eine zweite Brennstoffrücklaufleitung (4.9), die mit dem Brennstoffeinlass verbunden ist, wobei die zweite Brennstoffrücklaufleitung (4.9) eine Brennstoffkühivorrichtung (4.10) zum Kühlen des dem Puffertank (4.2) über die zweite Brennstoffrücklaufleitung (4.9) zugeführten Brennstoffs aufweist.

13. Brennstoffzufuhranordnung nach einem der vorhergehenden Ansprüche,
**dadurch gekennzeichnet, dass** ein Brennstoffvorfilter (4.11) zwischen dem Haupttank (4.1) und dem Puffertank (4.2) vorgesehen ist.

14. Brennstoffzufuhranordnung nach einem der vorhergehenden Ansprüche,
**dadurch gekennzeichnet, dass** der Haupttank (4.1) dafür ausgelegt ist in einem Unterbodenabschnitt (1.3) des Fahrzeugs angeordnet zu sein, insbesondere in einem Unterbodenabschnitt eines niederflurigen Abschnitts des Fahrzeugs.

15. Fahrzeug, insbesondere Schienenfahrzeug, das einen Motor (2) und eine Brennstoffzufuhranordnung (4; 4') nach einem der vorhergehenden Ansprüche aufweist, die mit dem Motor (2) verbunden ist, um dem Motor (2) Brennstoff zuzuführen.

16. Fahrzeug nach Anspruch 15, **dadurch gekennzeichnet, dass** der Puffertank (4.2) neben dem Motor (2) angeordnet ist, insbesondere innerhalb eines Motorraums (1.2) des Fahrzeugs, der den Motor (2) aufnimmt.

17. Fahrzeug nach Anspruch 15 oder 16, **dadurch gekennzeichnet, dass** es sich um ein Schienenfahrzeug mit einem niederflurigen Abschnitt handelt, wobei der Haupttank in einem Unterbodenabschnitt (1.3) des niederflurigen Abschnitts angeordnet ist.

18. Fahrzeug nach einem der Ansprüche 15 bis 17, **dadurch gekennzeichnet, dass** der Motor (2) in einem Unterbodenabschnitt des Fahrzeugs angeordnet ist.

## Revendications

1. Dispositif d'alimentation en carburant pour un véhicule, en particulier un véhicule ferroviaire, comprenant un réservoir principal (4.1) pour recevoir le carburant à fournir à un moteur (2) dudit véhicule dans une direction d'alimentation (4.5) et un réservoir tampon (4.2), ledit réservoir tampon (4.2) étant situé après ledit réservoir principal (4.1) par rapport à ladite direction d'alimentation et adapté à recevoir du carburant en provenance du réservoir principal (4.1) et fournir le carburant audit moteur (2), le volume utilisable dudit réservoir tampon (4.2) correspondant au volume de carburant suffisant pour alimenter ledit moteur (2) pour une première période prédéterminée pendant le fonctionnement normal dudit moteur (2), **caractérisé en ce que**
ladite première période est déterminée en fonction d'une seconde période, ladite seconde période étant représentative d'une période maximale avec un manque continu d'alimentation en carburant audit réservoir tampon (4.2) à prévoir ou admissible pendant le fonctionnement normal dudit véhicule.

2. Dispositif d'alimentation en carburant selon la revendication 1, **caractérisé en ce que** ledit réservoir tampon (4.2) a un volume utilisable considérablement inférieur audit réservoir principal (4.1).

3. Dispositif d'alimentation en carburant selon la revendication 1 ou 2, **caractérisé en ce que** ladite première période est déterminée en multipliant ladite seconde période par un facteur de sécurité, ledit facteur de sécurité allant de 1 à 1,5.

4. Dispositif d'alimentation en carburant selon une quelconque des revendications précédentes, **caractérisé en ce que** ladite première période est comprise entre 0,5 et 3 minutes, en particulier entre 1 et 2 minutes, lors du fonctionnement à pleine charge dudit moteur (2).

5. Dispositif d'alimentation en carburant selon une quelconque des revendications précédentes, **caractérisé par** au moins une pompe à carburant (4.3 ; 4.3') située entre ledit réservoir principal (4.1) et ledit réservoir tampon (4.2) pour fournir du carburant en provenance du réservoir principal (4.1) audit réservoir tampon (4.2) dans ladite direction d'alimentation (4.5).

6. Dispositif d'alimentation en carburant selon la revendication 5, **caractérisé en ce que** ladite pompe à carburant (4.3 ; 4.3') est agencée pour fournir du carburant audit réservoir tampon (4.2) à un premier débit volumétrique, ledit premier débit volumétrique étant au moins égal, ou de préférence supérieur, à un second débit volumétrique à fournir audit moteur (2).

7. Dispositif d'alimentation en carburant selon la revendication 6, **caractérisé en ce que** ledit second débit volumétrique est le débit volumétrique maximal à fournir audit moteur (2) pendant le fonctionnement normal dudit moteur.

8. Dispositif d'alimentation en carburant selon la revendication 6, **caractérisé en ce qu'**une unité de commande de pompe (5) connectée à ladite pompe à carburant (4.3') est prévue pour commander le débit volumétrique du carburant fourni audit réservoir tampon (4.2) par ladite pompe à carburant (4.3'), ladite unité de commande de pompe (5) étant adaptée pour recevoir un premier signal et pour commander le débit volumétrique fourni par ladite pompe à carburant (4.3') en fonction dudit premier signal, ledit premier signal étant représentatif dudit second débit volumétrique.

9. Dispositif d'alimentation en carburant selon la revendication 8, **caractérisé en ce que** ledit second débit volumétrique est un débit volumétrique effectif du carburant à fournir audit moteur (2).

10. Dispositif d'alimentation en carburant selon une quelconque des revendications précédentes, **caractérisé en ce que** ledit réservoir tampon (4.2) comprend un dispositif de débordement (4.7) pour éliminer le carburant excédentaire dudit réservoir tampon (4.2), ledit dispositif de débordement (4.7) étant de préférence connecté au réservoir principal (4.1) par le biais d'une première conduite de retour de carburant (4.8) pour réacheminer le carburant excédentaire audit réservoir principal (4.1) contre ladite direction d'alimentation (4.5).

11. Dispositif d'alimentation en carburant selon une quelconque des revendications précédentes, **caractérisé en ce que** ledit réservoir tampon (4.2) comprend une entrée de carburant pour recevoir du carburant excédentaire en provenance dudit moteur par le biais d'une seconde conduite de retour de carburant (4.9).

12. Dispositif d'alimentation en carburant selon la revendication 11, **caractérisé par** une seconde conduite de retour de carburant (4.9) connectée à ladite entrée de carburant, ladite seconde conduite de retour de carburant (4.9) comprenant un dispositif de refroidissement du carburant (4.10) pour refroidir le carburant fourni audit réservoir tampon (4.2) par le biais de la seconde conduite de retour de carburant (4.9).

13. Dispositif d'alimentation en carburant selon une quelconque des revendications précédentes, **caractérisé en ce qu'**un préfiltre à carburant (4.11) est prévu entre ledit réservoir principal (4.1) et ledit réservoir tampon (4.2).

14. Dispositif d'alimentation en carburant selon une quelconque des revendications précédentes, **caractérisé en ce que** le réservoir principal (4.1) est adapté pour être agencé dans une section sous le plancher (1.3) dudit véhicule, en particulier dans une section sous le plancher d'une section à plancher surbaissé dudit véhicule.

15. Véhicule, en particulier véhicule ferroviaire, comprenant un moteur (2) et un dispositif d'alimentation en carburant (4 ; 4') selon une quelconque des revendications précédentes connecté audit moteur (2) pour fournir du carburant audit moteur (2).

16. Véhicule selon la revendication 15, **caractérisé en ce que** ledit réservoir tampon (4.2) est situé de manière adjacente audit moteur (2), en particulier à l'intérieur d'un compartiment moteur (1.2) dudit véhicule recevant ledit moteur (2).

17. Véhicule selon la revendication 15 ou 16, **caractérisé en ce qu'**il s'agit d'un véhicule ferroviaire ayant une section à plancher surbaissé, ledit réservoir principal étant situé dans une section sous le plancher (1.3) de ladite section à plancher surbaissé.

18. Véhicule selon une quelconque des revendications 15 à 17, **caractérisé en ce que** ledit moteur (2) est situé dans une section sous le plancher dudit véhicule.
